# EUROPÄISCHE PATENTSCHRIFT

(11) **EP 1 671 058 B1**
(45) Veröffentlichungstag und Bekanntmachung des Hinweises auf die Patenterteilung: **12.10.2011**
(21) Anmeldenummer: 04713872.2
(22) Anmeldetag: 24.02.2004
(51) Int. Cl.: F16L 37/14

(54) **STECKVERBINDUNG FÜR ROHR- UND SCHLAUCHLEITUNGEN MIT RASTFEDERFÜHRUNG**
PLUG-IN CONNECTOR FOR TUBE AND HOSE LINES WITH SPRING CLIP GUIDE
RACCORD A EMBOITEMENT POUR CONDUITES TUBULAIRES OU EN TUYAUX SOUPLES, A GUIDAGE A RESSORT D'ARRET

(30) Priorität: 08.10.2003 DE 10346712
(43) Veröffentlichungstag der Anmeldung: 21.06.2006
(73) Patentinhaber: Henn GmbH & Co.KG, 6850 Dornbirn (AT)
(72) Erfinder: HARTMANN, Harald, A-6830 Rankweil (AT)
(74) Vertreter: Burger, Hannes
(86) Internationale Anmeldenummer: PCT/EP2004/001821
(87) Internationale Veröffentlichungsnummer: WO 2005/045299

(56) Entgegenhaltungen:
- CH-A- 448 644
- DE-U- 29 514 585
- US-A- 3 922 011
- US-A- 4 699 403
- US-A- 5 988 705

## Beschreibung

Gegenstand der Erfindung ist eine Steckverbindung für Rohr- und Schlauchleitungen mit einer Rastfederführung nach dem Oberbegriff des Patentanspruches 1.

Eine Steckverbindung für Rohr- und Schlauchleitungen ist beispielsweise mit der auf den gleichen Anmelder zurückgehenden EP 0 750 152 B1 bekannt geworden. Auf die dortige Beschreibung wird Bezug genommen. Sie soll vollinhaltlich von der vorliegenden Offenbarung umfasst sein.

Bei der Steckverbindung nach der EP 0 750 152 besteht die Gefahr, dass die Steckverbindung einseitig verrastet wird. Die Rastfeder besteht aus einem etwa U-förmigen Bügel, von dessen mittleren Basisschenkel aus sich zwei seitliche Rastschenkel erstrecken, die in zwei einander gegenüberliegenden, freien Federenden münden.

Die beiden Seitenschenkel wirken als Rastschenkel zur Herstellung der Rastverbindung zwischen einem Stutzen und einem Stecker. Dadurch werden zwei voneinander beabstandete, seitliche Raststellen gebildet.

Wird der Stutzen in die Einstecköffnung des Steckers eingeführt, dann greift eine Schräge am Stutzen unter die Rastschenkel der Rastfeder und hebt diese an. Wird der Stutzen geringfügig schräg verkantet in die Einführöffnung des Steckers eingeführt, dann kann es geschehen, dass der eine Rastschenkel bereits schon. über die Schräge des Stutzens hinweg eingerastet ist, während der andere, gegenüberliegende Schenkel noch nicht oder nur teilweise - eingerastet ist.

Für den Benutzer erscheint die Rastverbindung vollständig geschlossen und in Wirklichkeit ist die Rastverbindung wegen der Rastung nur auf einer Seite stark in der Funktion eingeschränkt.

Mit der Druckschrift CH 448644 A wird eine Steckverbindung, geeignet für Rohrund Schlauchleitungen, bestehend aus einem Stutzen mit einer mindestens teilweise am Außenumfang umlaufenden Rastschulter, die aus einer vom Außenumfang ansteigenden Schräge und eine sich in Einsteckrichtung dahinter anschließenden Rastfläche gebildet ist sowie einem mit dem Stutzen über mindestens zwei voneinander beabstandet angeordnete Raststellen an der Rastfläche des Stutzens verastbaren Stecker, der eine etwa u-förmige Rastfeder trägt, deren beide Seitenschenkel als Rastschenkel ausgebildet sind.
Diese Druckschrift weist den Nachteil auf, dass die Rastfeder nicht radial verschiebbar ausgebildet ist.

Mit der Druckschrift US-A-5,988,705 wird eine Schnellverschlusskupplung zur Verwendung mit einem rohrförmigen Querschnitt offenbart, die radial sich auswärts erstreckende Flansche angrenzend am freien Ende des Rohres aufweist und die Kupplung eine verlängertes Rohr und ein zylindrisches Gehäuse aufweist, welches einen axialen Durchgang und seine Öffnung an beiden Enden aufweist, wobei ein erstes Ende des Gehäuses ein inneres Kernteil vergrößerten Durchmesser aufweist, angeordnet zur axialen Aufnahme des freien Endes des Querschnitt, welcher den Querschnitts-Flansch, wenn der Querschnitt in Magnetrichtung eingesetzt ist - und ein Haltering mit Rastlappen innerhalb der inneren Kernteils des Gehäuses, verriegelbar den Querschnitts-Flansch eingreifend, wenn der Querschnitt zu seiner Verbindungsposition bewegt ist, während die Flüssigkeitsdichtung in den äußeren Umfang des Querschnitts eingreift, wobei eine Rückflusssicherung innerhalb des Gehäusedurchganges angeordnet ist, welche den Flüssigkeiten erlaubt in nur eine Richtung durch den Gehäusedurchgang zu fließen.

Mit der Druckschrift US 4,699,403 A wird ein Steckverbinder für Rohre mit einem ringförmigen Teil offenbart, wobei ein Verschlusseinrichtung Verschließteile aufweist, die sich durch Öffnungen hindurch in eine Verschlussposition des Steckverbinder bringen.
Diese Druckschrift weist den Nachteil auf, dass hier eine voraus laufende Verrastung der angeordneten Rastfeder mit ihren Rastbügeln oder Rastfahnen nicht zu entnehmen ist.

Mit der Druckschrift DE 298 14 585 U1 wird ein Rohranschluss zum Anschluss eines Gerätes an eine Rohrleitung offenbart, wobei der Rohranschluss ein geräteseitiges und ein rohrseitiges Anschlussteil aufweist, wobei eine mit einem Sicherungsteil versehenen vorspringenden Bereich des rohrseitigen Teils den Flansch des geräteseitige Teils umgreift, wobei der geräteseitige Teil einen vom Flansch abstehenden Ansatz aufweist und zwei voneinander beabstandete Federaufnahmen, die den rohrseitigen Teil des angeformten Bundes des rohrseitigen Teils hintergreifen.Diese Erfindung weist den Nachteil auf, dass die hier angeordnete Rastfeder nicht radial nach außen verschiebbar ausgebildet ist.

Mit der Druckschrift US 3,922,011 A wird ein Rohrverbinder offenbart, welcher eine Rastfeder mit einer Vielzahl von abgebogenen Rastschenkein aufweist, die am Umfang eines Steckers eingelegt ist.
Diese Druckschrift weist den Nachteil auf, dass sich die Rastfeder beim Lösen der Verbindung aufrichtet und den Rasteingriff somit verstärkt, wobei eine vorauseilende Verrastung ober Führung dieser Druckschrift ebenfalls nicht zu entnehmen ist.
Der Erfindung liegt deshalb die Aufgabe zugrunde, eine Steckverbindung für Rohrund Schlauchleitungen der eingangs genannten Art so weiterzubilden, dass beim Herstellen der Rastverbindung stets dafür gesorgt wird, dass die beiden einander gegenüberliegenden Rastschenkel der Rastfeder gleichmäßig hinter die Rastfläche an der Rastschulter des Stutzens gelangen.

Auch bei einseitigem und verkantetem Einführen des Stutzens soll eine einseitige Verrastung vermieden werden.

Zur Lösung der gestellten Aufgabe ist die Erfindung durch die technische Lehre des Anspruchs 1 gekennzeichnet.

Wesentliches Merkmal der Erfindung ist, dass im wesentlichen neben den zwei seitlichen Raststellen noch mindestens eine zusätzliche, etwa mittige Raststelle gebildet wird.

In an sich bekannter Weise werden die zwei Raststellen der Rastverbindung durch die beiden einander gegenüberliegenden Rastschenkel der Rastfeder gebildet. Erfindungsgemäß wird nun mindestens eine dritte Raststelle durch eine neuartige Form der Rastfeder gebildet. Die Rastfeder weist einen etwa mittigen Steuerbügel auf, der im Bereich des Basisschenkels der Rastfeder angeordnet ist.

Wenn in der folgenden Beschreibung von "einer" dritte Raststelle durch "einen" Steuerbügel der Rastfeder ausgegangen wird, so ist dies nicht einschränkend zu verstehen. Lediglich der einfacheren Beschreibung wegen wird eine einzige dritte, etwa mittige Raststelle beschrieben. Es können jedoch mehr als insgesamt drei Raststellen vorgesehen werden. Insbesondere können anstatt der einen mittleren, zusätzlichen Raststelle auch mehrere solche Raststellen vorgesehen werden.

Durch die Anordnung von (mindestens) drei Raststellen an der Rastfeder in Verbindung mit der Rastschulter am Stutzen wird ein vollkommen neuer Effekt erzielt:

Beim Einführen eines mit einer Rastschulter versehenen Stutzens in den neuartigen Stecker kommen zunächst alle drei Raststellen in Eingriff mit der Schräge an der Rastschulter des Stutzens.

Die Schräge an der Rastschülter sorgt zunächst dafür, dass die einander gegenüberliegenden Rastschenkel der Rastfeder aus ihren Rastfederdurchbrüchen angehoben werden.

Wichtig ist nun, dass an der Rastfeder im Bereich der mittleren Raststelle ein Steuerbügel angeordnet ist, der radial einwärts das Steckteil durchgreift und ebenfalls mit der Schräge an der Rastschulter des Stutzens zusammenwirkt. Dieser Steuerbügel ist nun das Teil, welches die Rastfederführung bildet und dafür sorgt, dass die beiden seitlichen Rastschenkel stets synchron und gleichzeitig hinter der Schräge der Rastschulter am Stutzen einrasten.

Dies wird erfindungsgemäß dadurch bewerkstelligt, dass beim Einstecken des Stutzens in den Stecker zunächst die Schräge an der Rastschulter den mittleren Steuerbügel anhebt und damit die Rastfeder in radialer Richtung auswärts verschiebt. Hierbei werden die Federenden der Rastfeder an der Wandung des Steckers in Umfangsrichtung verschoben, und die Rastfeder wird mit allen Raststellen in einen ausgerasteten und geöffneten Zustand gebracht.

Erfindungsgemäß ist nun vorgesehen, dass die mittlere Raststelle, die durch den Steuerbügel bewirkt wird, beim Einstecken des Stutzens in den Stecker als letztes die Rastverbindung herstellt. Sie hält die Rastverbindung so lange offen, bis mit weiterem Einstecken des Steckers in den Stutzen die beiden seitlichen Rastschenkel sicher und mit großem Abstand an der Rasttläche des Stutzens vorbei bewegt wurden und mit fortschreitender Einsteckbewegung sicher hinter der Rastfläche einrasten können.

Dies bedeutet, dass die Rastfeder in der angehobenen und geöffneten Stellung so lange gehalten wird, bis die Schräge des Stutzens die mittlere Raststelle gebildet aus dem mittigen Steuerbügel überlaufen hat und dieser nun hinter der Schräge eingerastet ist.

Erfindungsgemäß ist diese mittlere Raststelle in Einsteckrichtung zwischen dem Steuerbügel der Rastfeder und der Schräge an der Rastschulter des Stutzens in Einsteckrichtung (axial nach hinten) versetzt, so dass dafür gesorgt wird, dass zunächst der Steuerbügel an der Rastfläche der Rastschulter einrastet und die beiden Rastschenkel an der Rastfeder noch keine Einrastung erreichen können. Erst wenn der Steuerbügel an der Rastfläche der Rastschulter eingerastet ist, wird die Rastfeder in eine abgesenkte Position gebracht, und die Rastschenkel der Rastfeder gelangen ebenfalls in den Bereich der Rastfläche an der Rastschulter und rasten somit synchron und gleichzeitig ein.

Kern der Erfindung ist also, dass man durch Ausbildung einer dritten Rastfläche im mittleren Bereich der Rastfeder dafür sorgt, dass erst diese Raststelle hergestellt wird und dass, erst wenn diese Raststelle hergestellt ist, die beiden anderen Raststellen im Bereich der Rastschenkel synchron verrasten können.

Wird der Stutzen schräg in die Einstecköffnung des Steckers eingesteckt, dann ist stets dafür gesorgt, dass der Rastbügel im mittleren Bereich der Rastfeder in der angehobenen Stellung verbleibt, und damit werden die Rastschenkel der Rastfeder offen gehalten und können nicht einseitig hinter der Rastfläche an der Rastschulter des Stutzens einrasten.

Durch den Versatz der mittleren Raststelle in Einsteckrichtung in Bezug zu den beiden anderen Raststellen an dem jeweiligen Rastschenkel der Rastfeder ist dafür gesorgt, dass erst der Steuerbügel (auch als mittlere Steuröse bezeichnet) einrastet, die Feder dann damit in eine abgesenkte Rastposition bringt und erst danach bei weiterem Einstecken des Stutzens in die Steckverbindung die beiden einander gegenüberliegenden Rastschenkel ihre Rastverbindungen mit der Rastfläche an der Rastschulter des Stutzens eingehen.

Der mittlere Steuerbügel macht sozusagen die beiden seitlichen Raststellen "scharf" und zwar erst dann, wenn sie mit genügendem axialen Abstand hinter die jeweilige Rastfläche am Stutzen gebracht wurden. Damit ist sichergestellt, dass kein Hindernis (z.B. ein schräges Einstecken) den gleichzeitigen Rastvorgang dieser beiden Raststellen behindern kann.

Durch das Anheben des Steuerbügels im mittleren Bereich der Rastfeder wird die Rastfeder immer so lange offengehalten, bis der Steuerbügels seine Raststellung erreicht hat und hinter der Rastfläche der Rastschulter einrastet. Erst dann können auch die beiden anderen Rastschenkel der Rastfeder ihre Raststellung erreichen und ebenfalls einrasten.

Nachdem der Steuerbügel in der Einsteckrichtung nach vorne hin versetzt ist, muss der Stutzen mit großter Einstecktiefe erst in den Stecker eingesteckt werden, um so die mittlere Raststelle zum Eingriff zu bringen, bevor dann die axial weiter hinten liegenden Raststellen in Eingriff mit der Rastfläche der Rastschulter gelangen.

Damit ist stets sichergestellt, dass erst die mittlere (der Steuerung der Rastfeder dienende) Raststelle in Eingriff kommt, bevor dann synchron die beiden anderen Raststellen im Bereich der Rastschenkel in Eingriff mit der Rastfläche der Rastschulter des Stutzens gebracht werden.

Die Erfindung ist selbstverständlich nicht darauf beschränkt, dass nur ein einziger mittlerer Steuerbügel vorhanden ist. Statt eines Steuerbügels, der aus einer Abbiegung der Rastfeder besteht, können auch andere funktionell gleichwirkende Maßnahmen getroffen werden.

So kann es vorgesehen sein, dass im mittleren Bereich an der Rastfeder eine Fahne oder ein Schuh angeformt ist, der ebenfalls in den Innenraum des Steckers eingreift und mit der Schräge an der Rastschulter des Stutzens im Sinne einer Raststelle zusammenwirkt.

Ebenso ist es nicht notwendig, dass eine einzige mittlere Raststelle vorgesehen wird.

Es können auch anstatt einer auch zwei: oder drei mittlere Raststellen vorhanden sein. Die Beschreibung von insgesamt vorhandenen drei Raststellen (eine mittlere und zwei seitliche) ist deshalb nur beispielhaft zu verstehen und beschränkt nicht die Erfindung.

Im übrigen ist die hier beschriebene Steckverbindung völlig unabhängig davon, welches Medium durch die Steckverbindung fließt. Eine solche Steckverbindung kann deshalb für sämtliche Schlauch- und Rohrverbindungen verwendet werden, unabhängig welches Medium hindurchgeführt wird.

Der Stecker kann beispielsweise auch werkstoffeinstückig an ein daran ansetzendes Rohr oder Aggregat (z.B. ein Kühler) angeformt sein. Der gesamte Stecker kann beispielsweise aus einem Kunststoffmaterial bestehen, ebenso wie der Stutzen, der mit dem Stecker zur Verrastung gebracht wird.

Eine solche Steckverbindung wird zur Herstellung von flüssigkeitsdichten und luftdichten Verbindungen von Rohr- und Schlauchleitungen verwendet.

Der in Einsteckrichtung axiale Versatz des Steuerbügels erfolgt durch einen Steuerschlitz am Stecker, der nachfolgend auch als "Negativöse" bezeichnet wird.

Es gelten folgende Funktionsmerkmale:
- Der mittlerer Schlitz für "Negativöse" ist axial versetzt oder mit spezieller Kontur versehen, dadurch Überdrücken erforderlich. Dasselbe kann auch durch gekröpfte Feder erfolgen.
- Durch Negativöse wird Rastfeder radial nach außen verschoben und rutscht erst wieder in Verriegelungsposition, wenn sicher verrastet ist. Visualisierung kann durch Farbmarkierung an RF (Rastfeder) noch verdeutlich werden (Farbmarkierung so, dass sie hinter dem Flansch des Steckteiles verschwindet, wenn verriegelt.
- Verdrehsicherung
- Unverlierbarkeit durch Einhängen in elastischer Lasche oder durch "Haken" und elastischer Feder (versetzte Schlitze) oder zurückgestelltem Flansch über die Feder.
- Durch gebogenen Schenkel im Schlitzbereich liegt die Feder im Schlitz auf und rastet nicht ein, selbst wenn der Stutzen schon drin wäre. Selber Effekt auch durch angepassten Umschrießungswinkel.
- Zweidimensionale Feder (in einer Ebene) möglich, durch "Sicherungshaken" (=Negativöse) und spezieller Schlitz möglich.
- Kein unbeabsichtigtes Öffnen/Abheben der Rastfeder-Enden möglich, da die Federenden abgedeckt sind (Flansch, Zusatzteil,...) und die Bewegung beim Öffnen entlang dem Umfang erfolgt.

Vorteile:
- Verrastung einseitig nicht möglich
- Kein zusätzliches Teil
- Unverlierbarkeit
- Verdrehsicherung gegen asymmetrisches Verrasten
- Durch Verdrehsicherung optimierte, geringe Montagekraft
- Durch radiale Verschiebung optimierte Montagekraft, weil der Hebel maximiert wird.
- Verhaken geringer, einfachere Fertigung, Verletzungsgefahr geringer, bessere Magazinierbarkeit durch zweidimensionales Biegeteil.
- Evtl. kann Material eingespart werden, wenn die nach innen gebogenen Schenkel die Feder offen halten, kann auf den Umschließungswinkel verzichtet werden.
- Rastposition durch Stege an Steckteil möglich.

### Optimierte Schlitzlängen/Festigkeiten am Stecker

Funktionsmerkmale der Rastfeder:
- Nach innen gebogener Schenkel, damit die Schlitzlänge verkürzt werden kann.
- Auch asymmetrisch möglich (nur einseitig). Dann wäre das Halten des Maßes der Feder auf dem Stutzen leichter zu realisieren.

Vorteil bei der Steckerfertigung:
- geringere Schlitzlänge am Stecker für den Durchbruch der Rastfederschenkel, dadurch weniger Querschnittschwächung.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht als Viertelschnitt durch eine Steckverbindung nach der Erfindung in gelöstem Zustand
- Figur 2:: eine halbierte Stirnansicht der Darstellung nach Figur 1
- Figur 3:: ein Halbschnitt durch die Darstellung nach Figur 1
- Figur 4:: die Seitenansicht der Steckverbindung nach Figur 1
- Figur 5:: ein Viertelschnitt der Steckverbindung gemäß Figur 1 zu Beginn der Herstellung der Rastverbindung
- Figur 6:: eine halbierte Stirnansicht der Darstellung nach Figur 5
- Figur 7:: ein Halbschnitt durch die Darstellung nach Figur 5
- Figur 8:: die Seitenansicht einer Steckverbindung nach Figur 5 im gleichen. Steckstadium
- Figur 9:: eine vergrößerte Ansicht des mittleren Teils der Rastfeder und der Steckverbindung nach Figur 8
- Figur 10:: ein gegenüber Figur 5 fortgeschrittener Zustand der Rastverbindung im Viertelschnitt
- Figur 11:: die halbierte Stirnansicht der Darstellung nach Figur 10
- Figur 12:: ein halbierter Teilschnitt durch die Darstellung nach Figur 10
- Figur 13:: die Seitenansicht der Steckverbindung im Steckzustand nach Figur 10
- Figur 14:: eine vergrößerte Darstellung des Mittenbereiches der Steckverbindung nach Figur 13
- Figur 15:: ein Viertelschnitt durch die Steckverbindung in einem weiter fortgeschrittenen Zustand kurz vor Erreichen der endgültigen Raststellung
- Figur 16:: ein gegenüber Figur 15 fortgeschrittener Zustand der Steckverbindung mit teilweiser Raststellung
- Figur 17:: die perspektivische Seitenansicht der Steckverbindung in voll verrastetem Zustand
- Figur 18:: ein Viertelschnitt durch die Darstellung nach Figur 17 in voll verrastetem Zustand
- Figur 19:: eine Stirnansicht der Darstellung nach Figur 18
- Figur 20:: eine gegenüber den Figuren 1 bis 19 abgewandelte Ausführungsform einer Rastfeder mit abgekröpftem Rastschenkel
- Figur 21:: eine gegenüber den vorherigen Ausführungsbeispielen abgewandelte Ausführung einer Rastfeder mit abgekröpftem Steuerbügel
- Figur 22:: die Seitenansicht nach Figur 21
- Figur 23:: die vergrößerte Seitenansicht nach Figur 22
- Figur 24:: die Draufsicht auf Figur21
- Figur. 25:: eine perspektivische Seitenansicht der Rastverbindung im offenen Zustand mit einem Schutzrand am Steckteil
- Figur 26:: die gleiche Darstellung nach Figur 25 in verrastetem Zustand

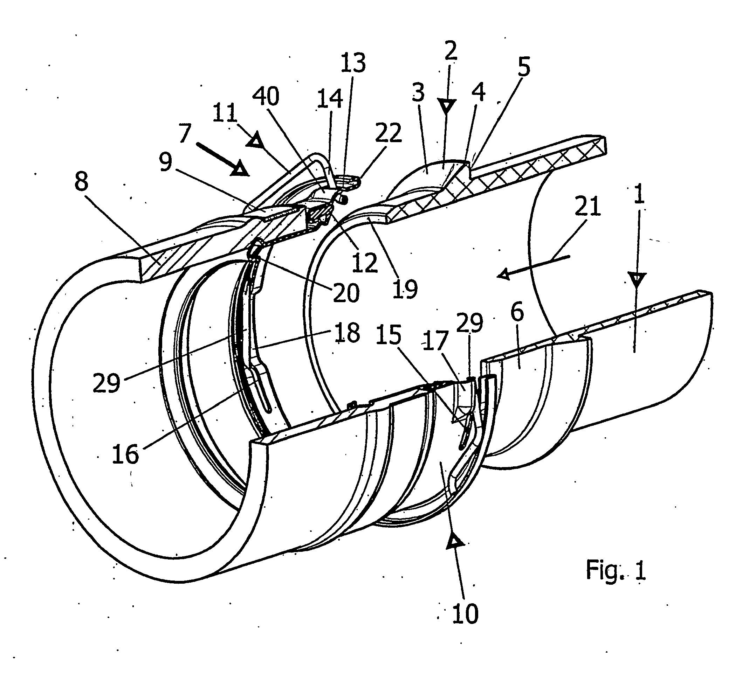

Das Ausführungsbeispiel nach den Figuren 1 bis 19 beschreibt einen Stutzen 1, der beispielsweise aus einem Kunststoff- oder einem Metallmaterial hergestellt sein kann. Er besteht aus einem vollzylindrischen Teil, welches an seinem Außenumfang eine Rastschulter 2 aufweist, die einen vergrößerten Durchmesser bildet. Die Rastschulter wird in Einsteckrichtung von einer Schräge 3 gebildet, die - mit sich vergrößerndem Durchmesser - in eine Zylinderfläche 4 übergeht, hinter der sich die Rastfläche 5 anschließt.

Für die Verwirklichung der technischen Lehre der Erfindung ist es im übrigen nicht lösungsnotwendig, dass die Schräge 3 und die sich dahinter anschliessende Rastfläche 5 ringsumlaufend sind. Sie können auch nur stückweise am Umfang des Stutzens 1 angeordnet sein.

Allerdings ergibt sich bei einer zirkular umlaufenden Anordnung der Vorteil, dass die Steckverbindung unabhängig von der Winkelverdrehung von Stecker und Stutzen ist.

Der Stutzen 1 wird in Pfeilrichtung 21 in den Stecker 7 eingeführt, wobei bei hergestellter (eingerasteter) Steckverbindung die Stirnseite 19 des Stutzens 1 an einem zugeordneten, radial einwärts gerichteten Ringwulst 20 des Steckers 7 anschlägt.

Der Stutzen 1 bildet in der Einsteckrichtung einen vorderen Führungszylinder 6 aus, der den Stecker 7 untergreift. Der Dichtring 12 am Stecker 7 dichtet im Bereich der Schräge 3.

Es kann jedoch auch vorgesehen sein, dass der Dichtring 12 im Bereich des Führungszylinders 6 am Stutzen 1 abdichtend anliegt.

Selbstverständlich können auch mehrere, hintereinander liegende Dichtringe verwendet werden.

Im Ausführungsbeispiel besteht der Stecker 7 aus einem Metallteil, an dessen hinteren zylindrischen Ansatz ein Schlauch 8 aufgeschoben ist, der mit einer Schelle 9 befestigt wird.

Statt der materialverschiedenen Verbindung eines Schlauches 8 mit dem Stecker 7 kann es in einer anderen Ausführungsform vorgesehen sein, dass der Schlauch 8 ein material-einstückiges Teil mit dem Stecker 7 bildet. In diesem Fall wäre der Schlauch 8 z.B. aus einem extrudierten Kunststoffmaterial, das werkstoffeinstückig mit dem ebenfalls aus einem Kunststoffmaterial bestehenden Stecker 7 verbunden ist.

Der Stecker 7 besteht im Wesentlichen aus einem Steckteil 10 und einer Rastfeder 11, die grundsätzlich etwa U-förmig profiliert ist und einen mittleren Basisschenkel aufweist, von dem aus sich seitlich zwei Rastschenkel 29 erstrecken,die im Wesentlichen zueinander parallel ausgebildet sind.

Der mittlere Basisschenkel der Rastfeder 11 ist als neuartiger Steuerbügel 14 ausgebildet, wie noch näher beschrieben werden wird.

In der Zeichnung nach Figur 1 ist der Steuerbügel 14 geschnitten, und man sieht lediglich den unteren, horizontalen Teil, der radial nach innen durch einen zugeordneten Steuerschlitz 13 im Steckteil 10 hindurchgreift.

Ferner sieht man in Figur 1, noch dass die Rastschenkel 29 durch zugeordnete Rastfederdurchbrüche 15, 16 im Steckteil hindurchgreifen und somit in den Innenraum des Steckers 7 eingreifen, um mit der Schräge 3 und der dahinter anschließenden Rastfläche 5 des Stutzens 1 zusammenzuwirken.

Die Rastfederdurchbrüche 15, 16 sind durch entsprechende Führungssicken 17, 18 eingefasst.

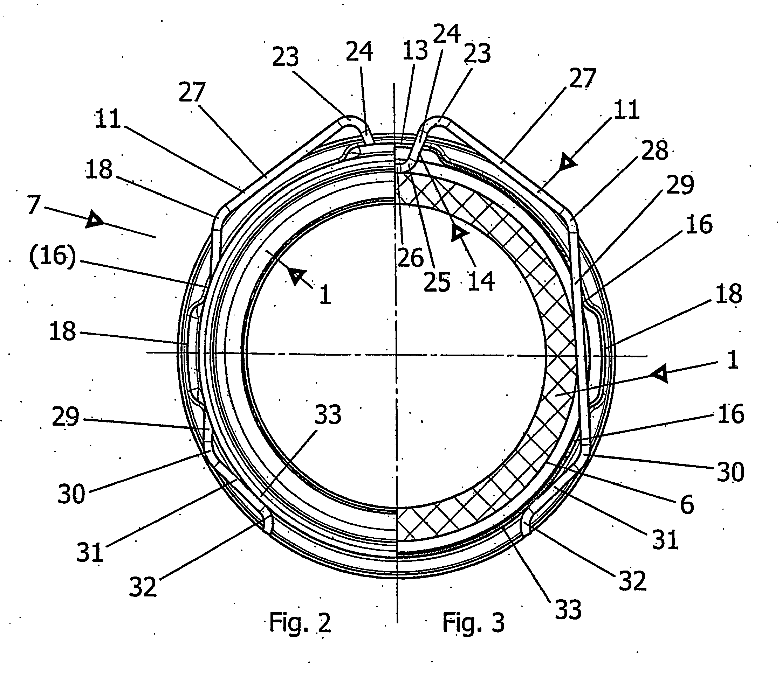

Die Figuren 2 und 3 zeigen weitere Einzelheiten der Rastfeder 11. Wichtig ist, dass der mittlere Teil der Rastfeder aus einem horizontalen Basisschenkel 26 besteht, an dem sich über eine schräg nach oben gerichtete Abbiegung 25 ein Schrägschenkel 24 ansetzt, der über eine Abbiegung 23 in einen Federschenkel 27 übergeht, der seinerseits über eine Abbiegung 28 in den der Verrastung dienenden Rastschenkel 29 übergeht.

Am freien Ende des Rastschenkels 29 ist jeweils eine Abbiegung 30 angeordnet, an die ein Fußschenkel 31 ansetzt, an dessen freien vorderen Ende ein nach oben abgekröpft abgebogenes Federende 32 angeordnet ist.
Die Rastfeder 11 ist streng spiegelsymmetrisch zur Mittenlinie der Figur 3, so dass es ausreicht, lediglich eine Seite zu beschreiben, weil die andere Seite genau gleich ausgebildet ist.

Das Steckteil 10 bildet im übrigen noch einen umgebördelten Verstärkungsrand 22, der die mechanische Festigkeit des Steckers 7 verbessert.

Die Figuren 2 und 3 zeigen den offenen Zustand der Rastverbindung, d. h. die mittlere Raststelle, welche durch den Steuerbügel 14 gebildet ist, liegt vor der Schräge 3 des Stutzens 1, ebenso wie auch die Rastschenkel 29. Es hat noch keine Verrastung stattgefunden.

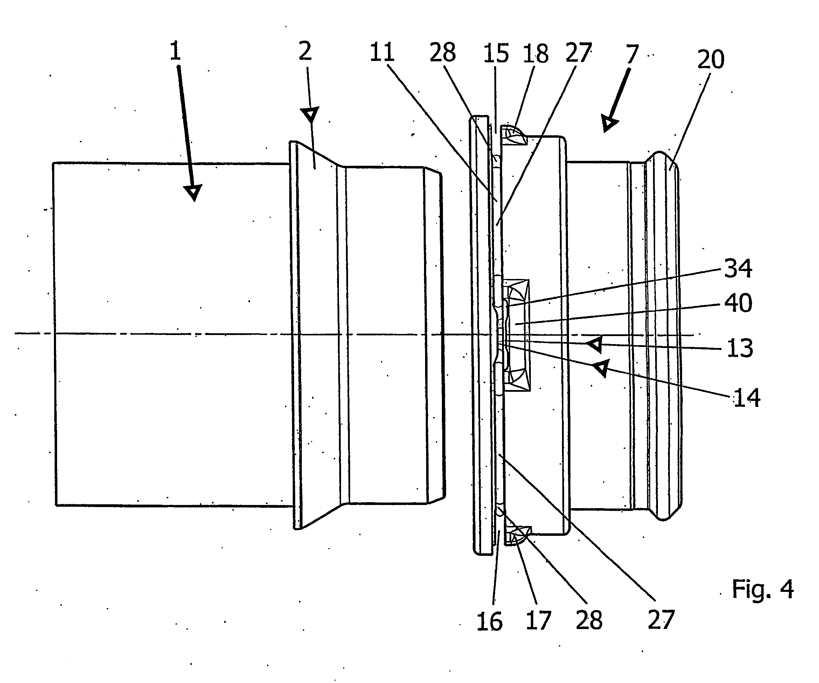

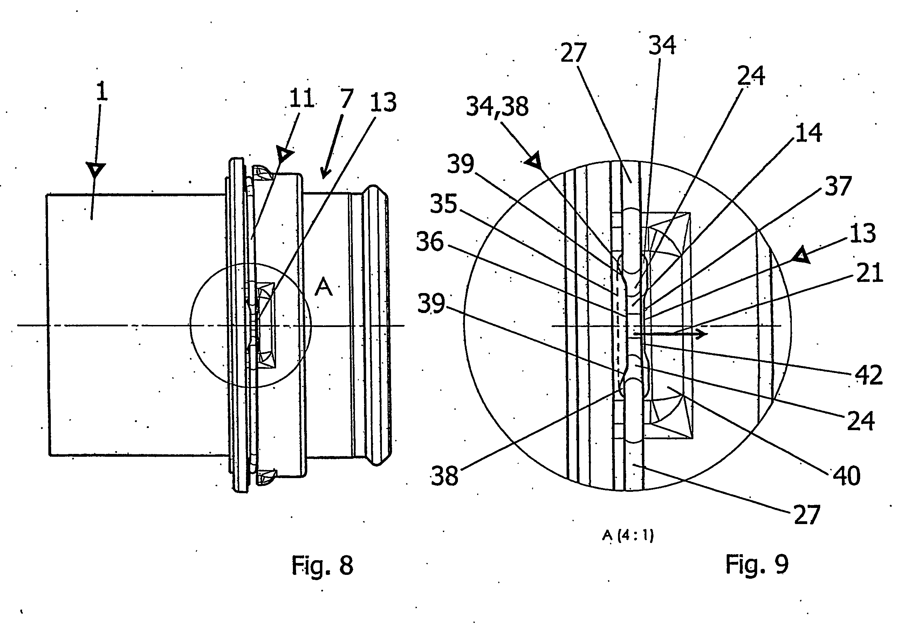

Die Figur 4 zeigt die Draufsicht von oben auf die noch nicht zusammengesteckte Rastverbindung, wo erkennbar ist, dass der mittlere Steuerbügel 14 der Rastfeder 11 in ein Langloch 34 am Steckteil 10 des Steckers 7 eingreift. Die besondere Form des Langloches wird anhand der Figur 9 später noch erläutert.

Dieses Langloch bildet einen Steuerschlitz 13, der für einen Versatz des Steuerbügels 14 in Einsteckrichtung: 21 sorgt, wenn die Steckverbindung hergestellt wird. Im nicht eingesteckten Zustand ist der Steuerbügel 14 in einer Ebene mit den sich daran anschließenden Federschenkeln 27 und 29 der Rastfeder 11.

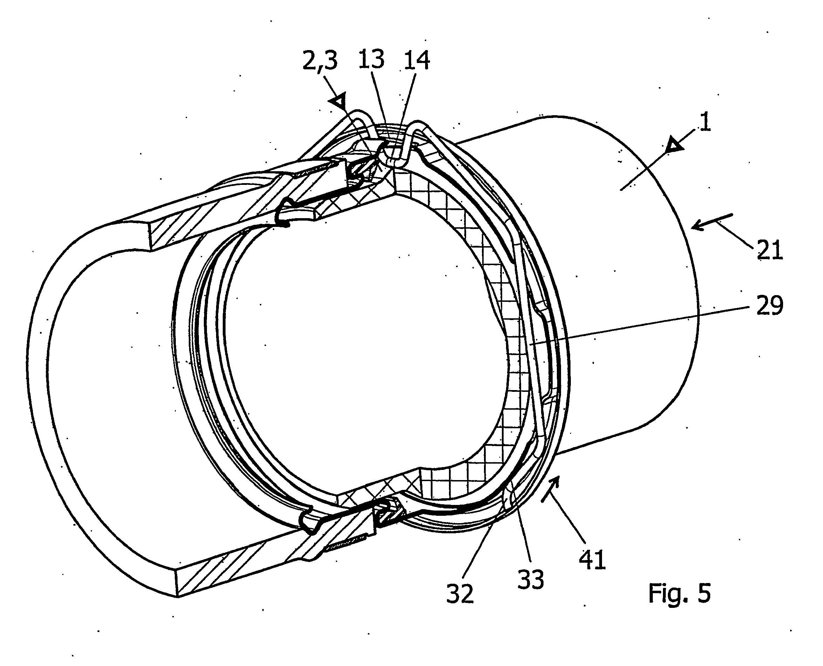

Beim Herstellen der Steckverbindung kommt somit die Schräge 3 an der Rastschulter 2 des Stutzens 1 in Eingriff sowohl mit dem Steuerbügel 14 als auch mit den beiden Rastschenkeln 29. Dies zeigt die Figur 5. Hier ist erkennbar, dass beim Einführen des Stutzens 1 in den Stecker 7 der Steuerbügel 14 in radiale Richtung nach außen hochgehoben wird, wodurch insgesamt die Rastfeder 11 angehoben wird und die beiden Federenden 32 eine Verschiebebewegung in Pfeilrichtung 41 entlang der Wandung 33 am Außenumfang vom Stecker 7 machen.

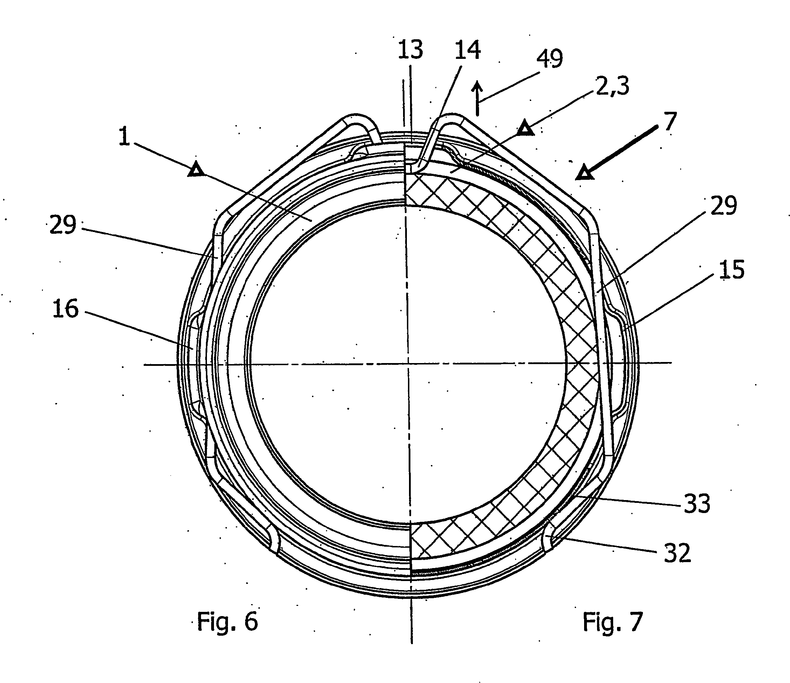

Die gleiche Situation wie in Figur 5 ist in den beiden Halbdarstellungen nach Figur 6 und 7 ebenfalls dargestellt.

Man erkennt, dass der Steuerbügel 14 in Pfeilrichtung 49 angehoben ist und gleichzeitig werden die Rastschenkel 29 in Pfeilrichtung 41 nach oben verschoben und gleiten hierbei in den einander zugeordneten Rastfederdurchbrüchen 15, 16. Damit werden die Rastschenkel 29 geöffnet, so dass deren gegenseitiger Durchmesser größer ist als der Durchmesser der Zylinderfläche 4 am Stutzen 1.

Diese Situation ist auch in den Figuren 8 und 9 dargestellt, wobei anhand der Figur 9 nun die besondere Formgebung des Steuerschlitzes 13 dargestellt wird, der für einen axialen Versatz der mittleren Raststelle am Steuerbügel 14 im Bezug zu den beiden außen liegenden Raststellen an den Rastschenkel 29 sorgt.

Der Steuerschlitz 13 besteht im Wesentlichen aus einem Langloch 34, welches jedoch in seinem mittleren Bereich eingeschnürt ist. Dies ist durch die gestrichelt eingezeichnete Begrenzung 35 dargestellt, welche die vollständige, lichte Weite des Langloches 34 zeigt. Statt dieser Begrenzung 35 weist dieses Langloch jedoch mittlere Bereiche mit Einschnürungen 36, 37 auf, die einander gegenüber liegen und die einen kleineren gegenseitigen Abstand zueinander einnehmen als beispielsweise die außen im Langloch außenliegenden Bereiche, wo das Langloch demzufolge zwei einander gegenüberliegende, erweiterte Augen 38 bildet.

In der abgesenkten, nicht verrasteten Stellung liegt deshalb der etwa trapezförmig profilierte Steuerbügel 14 mit seinen beiden Schrägschenkeln 24 komplett im Bereich der Augen 38 und liegt am linken Rand des jeweiligen Auges 38 an.

Wird hingegen der Steuerbügel 14 durch Auflaufen auf die Schräge 3 an der Rastschulter 2 in senkrechte Richtung zur Zeichenebene der Figur 9 nach oben abgehoben, dann gelangen die Schrägschenkel 24 in den Bereich der Schräge 39 an der vorderen Begrenzung des Langloches 34, und damit wird der gesamte Steuerbügel 14 in Pfeilrichtung 21 nach hinten (in der Einsteckrichtung gesehen) bewegt. Damit wird der gesamte Mittenbereich der Rastfeder mit dem Steuerbügel 14 in Pfeilrichtung 21 bewegt (mitgenommen), wobei die äußeren Bereiche der Rastfeder mit den Federschenkeln 27 in axialer Richtung fixiert bleiben und nicht bewegt werden. Es kommt also zu einer geringfügigen Verbiegung der Rastfeder im mittleren Bereich in Einsteckrichtung, wobei der Steuerbügel 14 in der Einsteckrichtung nach hinten bewegt wird.

Das Langloch 34 ist im Bereich einer durchmesservergrößernden Führungssicke 40 angeordnet, die dafür sorgt, dass der Steuerbügel 14 in radialer Richtung auswärts im Eingriff mit dem Langloch 34 bleibt, auch wenn der Stutzen mit dem größten Durchmesser der Zylinderfläche 4 den Steuerbügel 14 in radiale Richtung auswärts verdrängt hat.

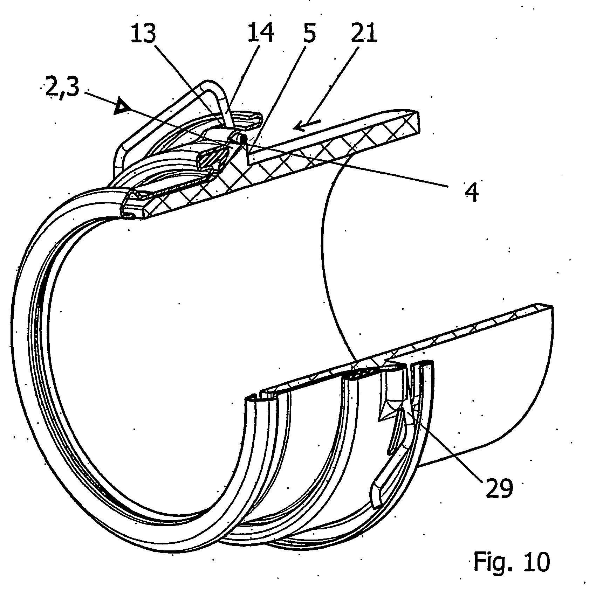

Diese Situation ist in Figur 10 dargestellt, wo die weitest mögliche Verdrängung der Rastfeder 11 im Bereich des Steuerbügels 14 dargestellt ist.

Gleichzeitig ist dargestellt, dass der Steuerbügel 14 in Pfeilrichtung 21 in axialer Richtung nach hinten (in Steckrichtung) versetzt wird und die beiden Rastschenkel 29 der Rastfeder hierbei unbeeinflusst sind.

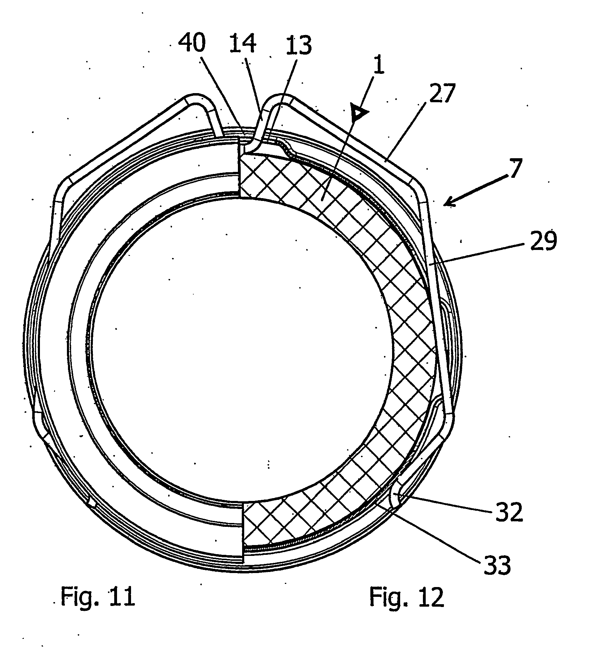

Diese Situation ist in den Figuren 11 und 12 dargestellt, wo erkennbar ist, dass in der angehobenen Stellung der Rastfeder 11 die Federenden 32 noch satt auf der Wandung 33 des Steckteils 10 aufsitzen und der Steuerbügel 14 in Verschieberichtung an der Sicke 40 entlang geführt wird.

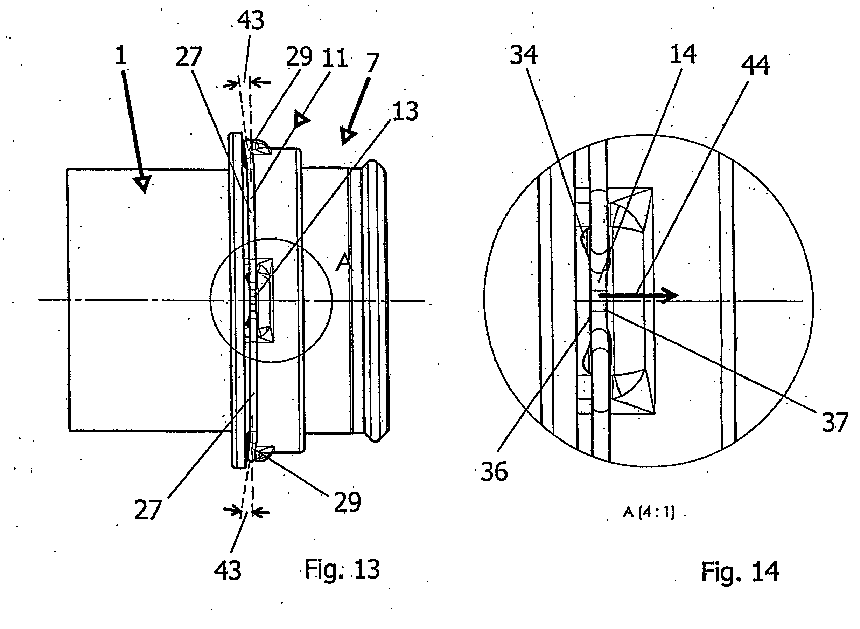

Die Figuren 13 und 14 zeigen im Vergleich zu den Figuren 8 und 9 die vollständige radiale Verdrängung der Rastfeder kurz vor Erreichen der Raststellung.

Hierbei ist erkennbar, dass nun der Steuerbügel 14 in Pfeilrichtung 44 eine Kippbewegung durchgeführt hat. Dies wird deutlich, indem durch Vergleich der Figur 9 mit der Figur 14 erkennbar ist, dass das vorher vorhandene Bewegungsspiel 42 zwischen der Einschnürung 37 und dem hinteren Teil des Steuerbügels 14 verschwunden ist und demzufolge der gesamte Steuerbügel 14 im Bereich des Steuerschlitzes 13 in axiale Richtung (in Pfeilrichtung 44) eine Kippbewegung durchgeführt hat.

Damit sind auch die Schrägschenkel 24 außer Eingriff mit den Schrägen 39 am Langloch 34.

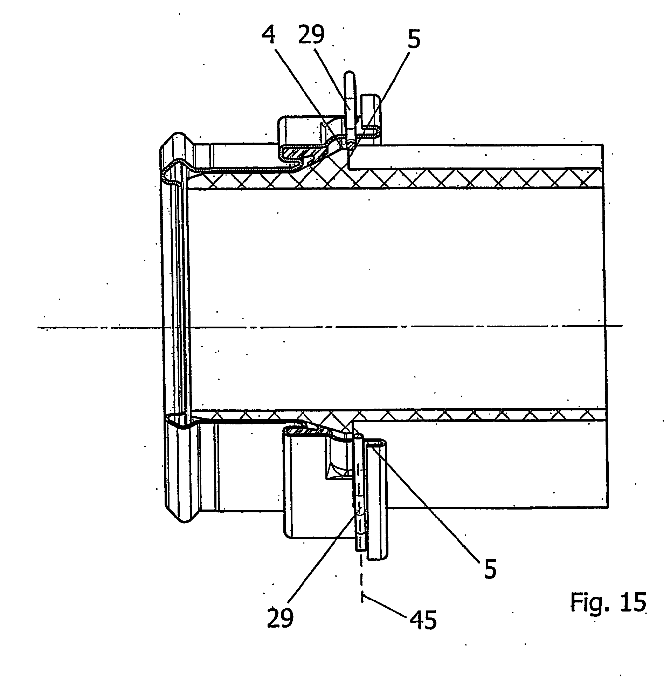

Die Figur 15 zeigt diese Situation im Schnitt wo erkennbar ist, dass die Rastschenkel 29 bereits schon die Zylinderfläche 4 überschritten haben und hinter der Rastfläche 5 einrasten könnten. Dies ist jedoch noch nicht möglich, weil der Steuerbügel 14 in radial angehobener Position noch auf der Zylinderfläche 4 aufliegt und damit ein Einrasten der Rastschenkel 29 noch nicht zulässt.

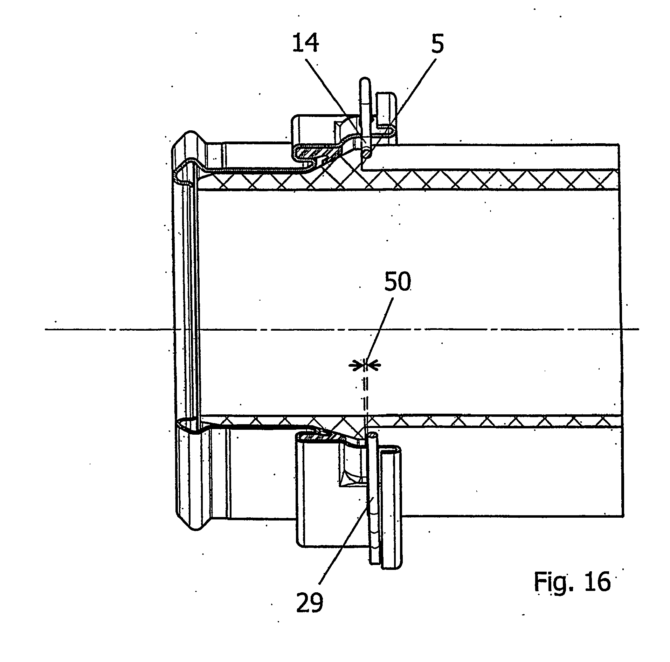

Die Figur 16 zeigt einen gegenüber Figur 15 fortgeschrittenen Zustand der Bewegung der Rastvorrichtung, wo erkennbar ist, dass die beiden Rastschenkel 29 bereits schon weiter an der Rastfläche 5 in radialer Richtung einwärts verschoben wurden, jedoch eine vollständige Verrastung nicht möglich ist, weil kurz dahinter der Steuerbügel 14 noch auf der Zylinderfläche 4 aufliegt und eine vollständige Verrastung noch nicht möglich ist.

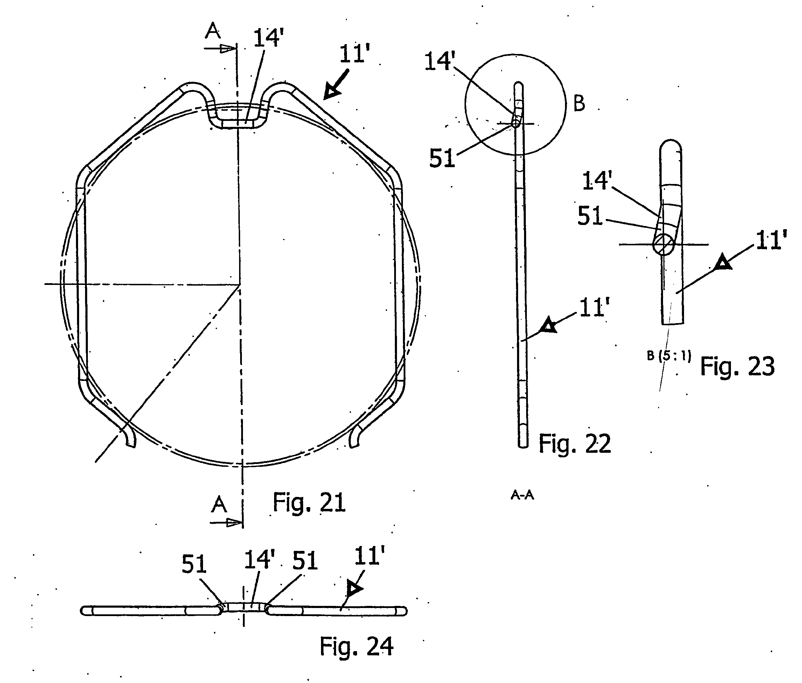

Erst mit weiterem Einstecken des Stützens 1 in den Stecker 7 gelangt auch der Steuerbügel 14 über die Zylinderfläche 4 hinweg in den Bereich der daran sich anschließenden Rastfläche, und damit wird erst die radial auswärts gerichtete Verdrängung des Steuerbügels 14 aufgehoben, der damit aufgrund seiner Federkraft radial einwärts verschoben wird, und gleichzeitig können damit dann die Rastschenkel 29 gemäß Figur 16 simultan einrasten. Diese Verhältnisse sind in Figur 24 dargestellt, wo erkennbar ist, dass der Steuerbügel 14 gerade in seiner Raststellung hinter der Rastfläche 5 gelangt und die beiden Rastschenkel 29 (von denen lediglich einer in Figur 16 dargestellt ist) bereits schon um einen Versatz 50 von der Rastfläche 5 entfernt sind. Dies bedeutet, dass die Rastschenkel 29 nun sicher - wegen des vorhandenen Versatzes 50 - hinter der Rastfläche 5 einrasten und dies nur gelingt, wenn auch der Steuerbügel 14 hinter der Rastfläche 5 eingerastet ist.

Damit ist klargestellt, dass immer zunächst der Steuerbügel 14 seine Raststellung erreichen muss, bevor nach axialem Versatz 50 die beiden Rastschenkel 29 sicher hinter die Rastfläche 5 gelangen, ohne dass die Gefahr besteht, dass bei schrägem Einführen des Stutzens dieser Versatz 50 verschwindet.

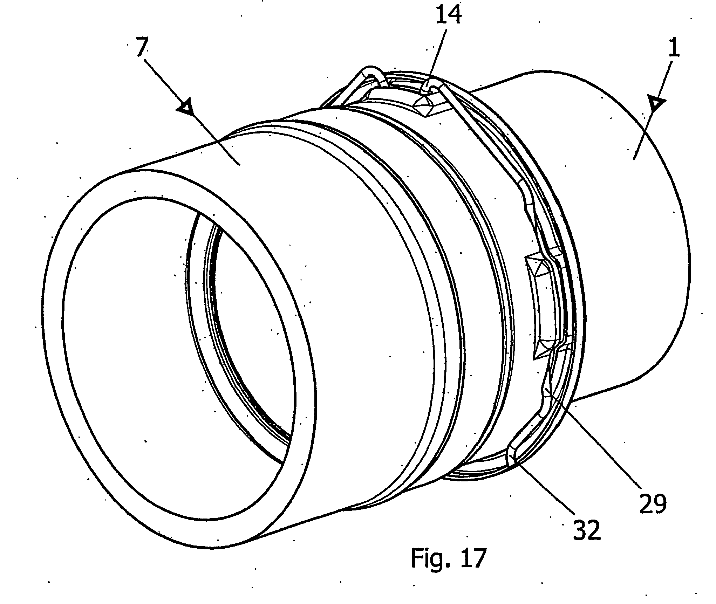

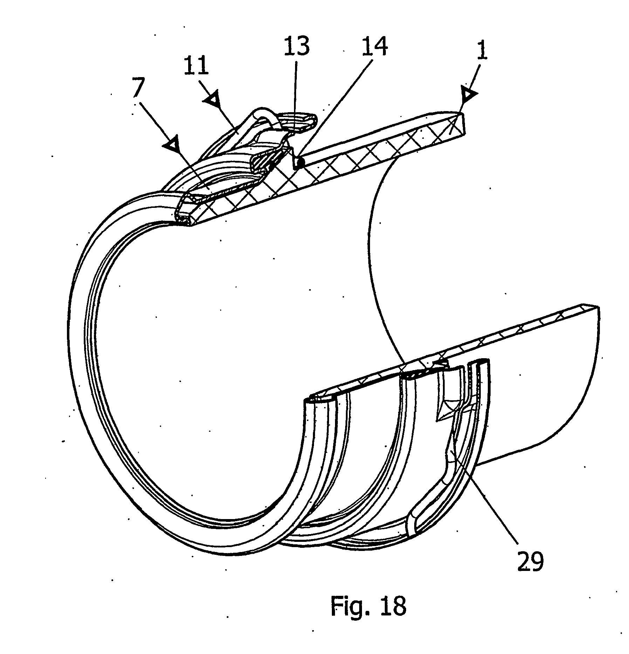

Die Figur 17 zeigt die vollständig verrastete Stellung zwischen Stecker und Stutzen und Figur 18 zeigt einen Viertelschnitt durch die vollständig verrastete Stellung. Durch das komplette. Hineinrutschen des Steuerbügels in das Langloch 34 des Steuerschlitzes 13 wird der vorher beschriebene Versatz 50 zwischen dem Steuerbügel 14 und dem Rastschenkel 29 aufgehoben, und die genannten Teile befinden sich wieder in der gleichen Ebene, wie dies in Figur 18 dargestellt ist.

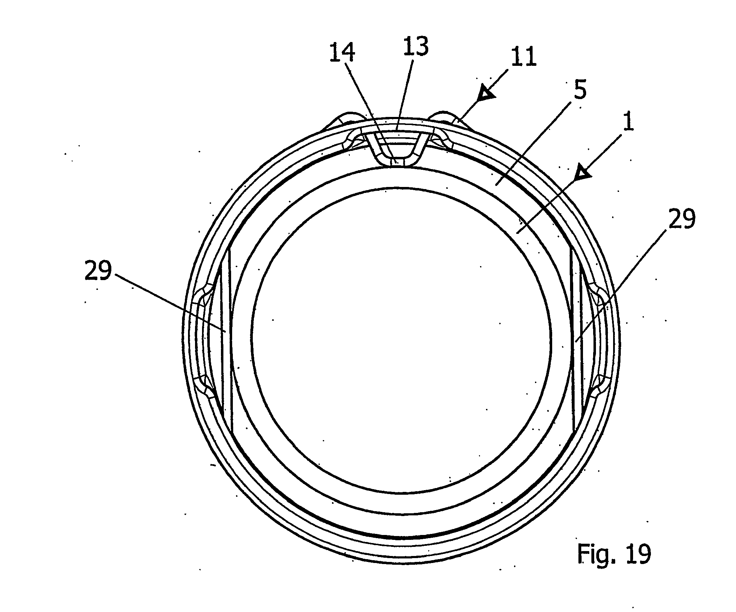

Die Figur 19 zeigt die vollständig verrastete Stellung gemäß dem Schnitt in Figur 18.

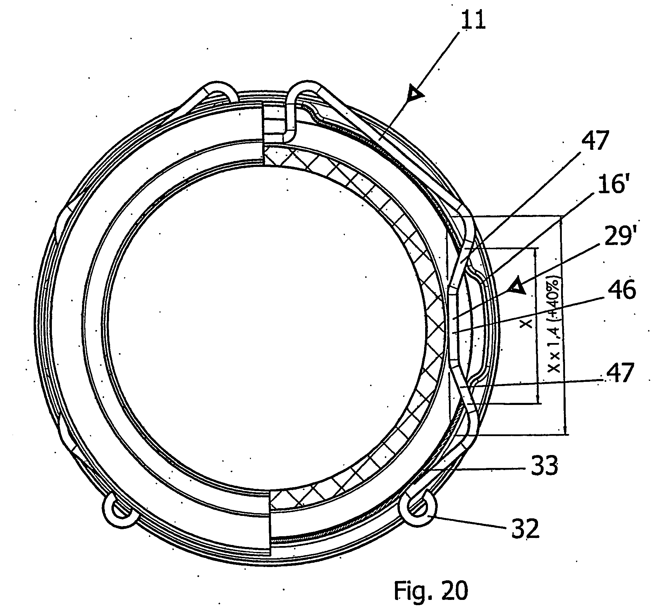

Figur 20 zeigt ein gegenüber dem vorher beschriebenen Ausführungsbeispiel abgewandelte Ausführungsform. Kern dieser abgewandelten Ausführungsform ist, dass man die Schlitzlänge der Rastfederdurchbrüche 15, 16 möglichst kurz halten will. Damit erfolgt nur eine minimale Schwächung der Wandung des Steckers.

Zu diesem Zweck sieht diese Ausführungsform vor, dass die Rastschenkel 29 nicht als Geraden ausgeführt sind, sondern die Rastschenkel 29' bilden einwärts geneigte Abkröpfungen. Damit können die Rastfederdurchbrüche 15', 16' verkürzt ausgebildet werden.

Die Abkröpfung am Rastschenkel 29' besteht im wesentlichen aus einem radial einwärts gebogenen Verbindungsschenkel 47, der in einen Basisschenkel 46 übergeht, der wiederum über einen Verbindungsschenkel 47 mit dem außenliegenden Federende 32 verbunden ist.

In einer anderen Ausgestaltung kann es vorgesehen sein, dass lediglich der obere Verbindungsschenkel 47 radial einwärts gerichtet schräg abgekröpft ist, während der untere Verbindungsschenkel 47 parallel und gleichachsig - zu dem Basisschenkel 46 verläuft.

Die umgekehrte Darstellung ist ebenso möglich, dass der obere Verbindungsschenkel 47 gerade und parallel zum Basisschenkel 46 ausgebildet ist und der untere Verbindungsschenkel 47 entsprechend abgekröpft ist.

Die Figur 20 zeigt im Übrigen auch, dass das Federende 32 komplett entfallen könnte. Sinn dieses Federendes 32 ist nämlich Entlanggleiten der Rastfeder (im Bereich des Federendes 32) beim Anheben, der Rastfeder in radiale Richtung auswärts zu ermöglichen.

Diese Verschiebefunktion des Federendes an der Wandung 33 des Steckers 7 kann auch entfallen, wenn man dafür sorgt, dass der schräg einwärts gerichtete Verbindungsschenkel 47 an der Wandung des Rastfederdurchbruches 15', 16' entlang gleitet. Dem gemäß kann also eine andere Verschiebeführung für diese Rastfeder vorgesehen werden.

Die Figuren 21 bis 24 zeigen als weitere Ausführungsform, dass der Steuerschlitz 13 mit dem Langloch 34 auch vollständig entfallen kann und stattdessen der Steuerbügel 14' an der Rastfeder 11' von vornherein in Einsteckrichtung abgekröpft ist, wie dies in den Figuren 22 bis 24 dargestellt ist. Es kann dann auf eine Kippbewegung 44 verzichtet werden, weil der Steuerbügel 14' stets in Einsteckrichtung nach vorne abgekröpft ist und damit eine hinter den beiden anderen Raststellen an den Rastschenkeln 29 in axiale Richtung nach vorne versetzte Raststelle bildet.

Die vorher erwähnte Kippbewegung 44 äußert sich im übrigen durch einen Versatz 43, der sich in den Figuren 13 und 14 ergibt, wenn der Steuerbügel 14 aus dem Steuerschlitz 13 fast vollständig herausgehoben ist. Hierbei ist erkennbar, dass die Rastschenkel 29 in gerader Ausrichtung gehalten werden, während sich die im mittleren Bereich daran anschließenden Federschenkel 27 in Einsteckrichtung nach vorne um die Kippbewegung 44 bewegen. Es ergibt sich dann der in Figur 13 gezeichnete Versatz 43 zwischen dem mittleren Bereich der Rastfeder, nämlich im Steuerbügel 14 und den Rastschenkeln 29.

Dies wird auch durch die Neigung 45 in Figur 15 dargestellt.

Die Figur 14 zeigt im übrigen, dass die beiden sich gegenüberliegenden Einschnürungen 36, 37 im Langloch 34 eine Engstelle bilden, so dass der Steuerbügel 14 nicht aus dem Steuerschlitz 13 herausschlüpfen kann. Es handelt sich also um eine Verlierersicherung.

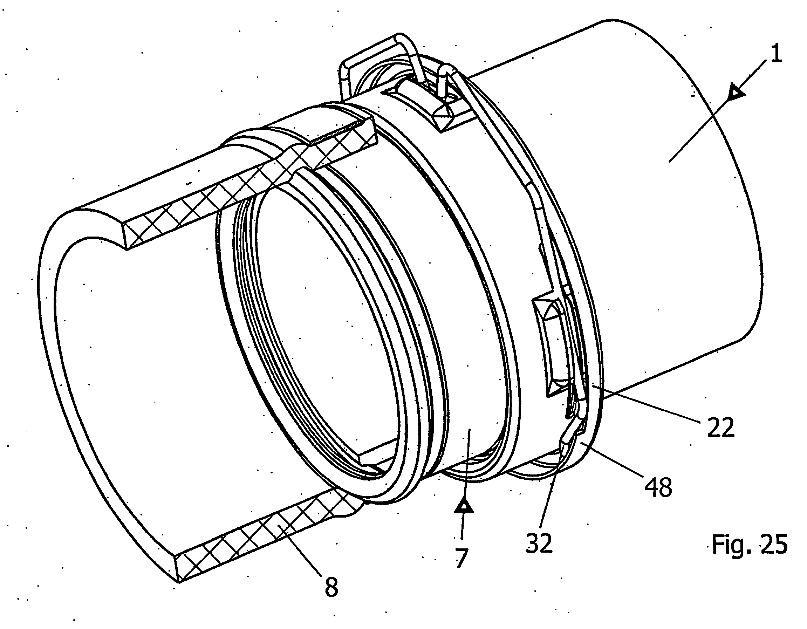

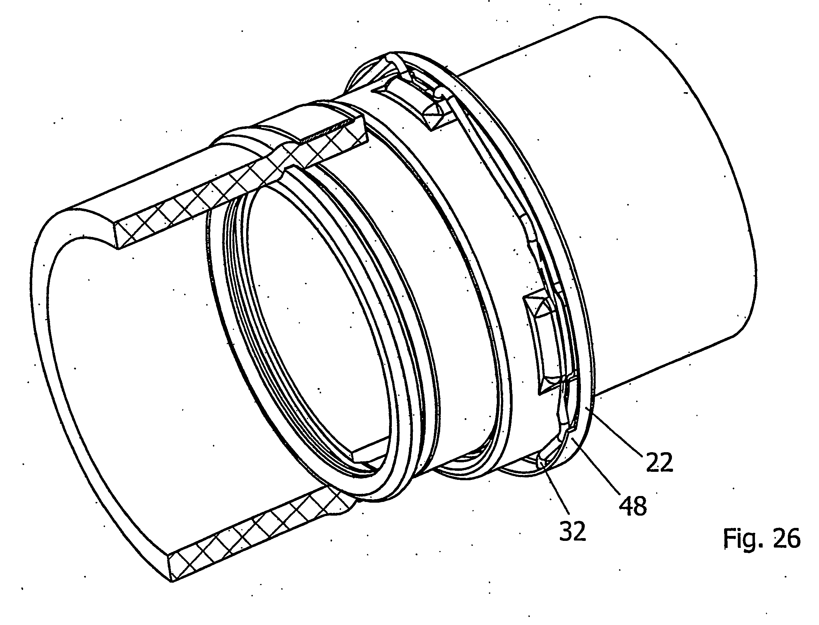

Die Figuren 25 und 26 zeigen als weiteres Ausführungsbeispiel, dass der Verstärkungsrand 22 des Steckers 7 auch einen in axialer Richtung verlängerten Schutzrand 48 im Bereich der Federenden 32 aufweisen kann, der die Federenden abdeckt. Der Schutzrand 48 verhindert ein unbeabsichtigtes Herausheben der Federenden 32 vom Steckteil 10.

### Zeichnungislegende

- 1: Stutzen
- 2: Rastschalter
- 3: Schräge
- 4: Zylinderfläche
- 5: Rastfläche
- 6: Führungszylinder
- 7: Stecker
- 8: Schlauch
- 9: Schelle
- 10: Steckteil
- 11: Rastfeder 11'
- 12: Dichtring
- 13: Steuerschlitz
- 14: Steuerbügel 14'
- 15: Rastfederdurchbruch 15'
- 16: Rastfederdurchbruch 16'
- 17: Führungssicke
- 18: Führungssicke
- 19: Stirnseite
- 20: Ringwulst
- 21: Pfeilrichtung
- 22: Verstärkungsende
- 23: Abbiegung
- 24: Schrägschenkel
- 25: Abbiegung
- 26: Basisschenkel
- 27: Federschenkel
- 28: Abbiegung
- 29: Rastschenkel 29'
- 30: Abbiegung
- 31: Fußschenkel
- 32: Federende
- 33: Wandung
- 34: Langloch
- 35: Begrenzung
- 36: Einschnürung
- 37: Einschnürung
- 38: Auge
- 39: Schräge
- 40: Führungssicke
- 41: Pfeilrichtung
- 42: Bewegungsspiel
- 43: Versatz
- 44: Kippbewegung
- 45: Neigung
- 46: Basisschenkel
- 47: Verbindungsschenkel
- 48: Schutzrand
- 49: Pfeilrichtung
- 50: Versatz
- 51: Abkröpfung

## Patentansprüche

1. Steckverbindung für Rohr- und Schlauchleitungen, bestehend aus einem Stutzen (1) mit einer mindestens teilweise am Außenumfang umlaufenden Rastschulter (2), die aus einer vom Außenumfang ansteigenden Schräge (3) und einer sich in Einsteckrichtung (21) dahinter anschließenden Rastfläche (5) gebildet ist, sowie einem mit dem Stutzen (1) über mindestens zwei voneinander beabstandet angeordnete Raststellen (15, 16, 29, 29') an der Rastfläche (5) des Stutzens (1) verrastbaren Stecker (7), der eine radial verschiebbare, etwa U-förmige Rastfeder (11, 11') trägt, welche U-förmige Rastfeder (11, 11') zusammen mit der Rastfläche (5) die mindestens zwei voneinander beabstandet angeordneten Raststellen (15,16, 29, 29') bildet, wobei beide Seitenschenkel der U-förmigen Rastfeder (11, 11') als Rastschenkel (29, 29') ausgebildet sind,
wobei die Rastfeder (11, 11') mindestens eine weitere, in Bezug auf die mindestens zwei voneinander beabstandet angeordneten Raststellen (15, 16, 29, 29'), etwa mittige Raststelle (13, 14) zwischen dem Stecker (7) und dem Stutzen (1) ausbildet und wobei diese weitere Raststelle (13, 14) in Einsteckrichtung (21) den beiden mindestens zwei voneinander beabstandet angeordneten Raststellen (15, 16, 29, 29') voraus läuft, **dadurch gekennzeichnet, dass** die Rastfeder (11, 11') einen mittleren Basisschenkel aufweist und die Rastschenkel (29, 29') im Wesentlichen zueinander parallel ausgebildet sind,

2. Steckverbindung nach Anspruch 1, **dadurch gekennzeichnet, dass** beim Einstecken des Stutzens (1) in den Stecker (7) zunächst die mittlere Rastverbindung an der Rastfeder (11, 11') mit der Rastfläche (5) am Stutzen (1) einrastet und hierdurch eine radial einwärts gerichtete Relativbewegung der Rastfeder (11, 11') am Stecker (7) erfolgt, der mit axialem Versatz (50) die beiden seitlichen Rastschenkel (29, 29') der Rastfeder (11, 11') zur Einrastung an der Rastfläche (5) des Stutzens (1) bringt.

3. Steckverbindung nach Anspruch 1 oder 2, **dadurch gekennzeichnet, dass** die weitere, etwa mittige Raststelle als radial einwärts gerichteter Steuerbügel (14, 14') an der Rastfeder (11, 11') ausgebildet ist.

4. Steckverbindung nach Anspruch 3, **dadurch gekennzeichnet, dass** der Steuerbügel (14) etwa trapezförmig aus der Rastfeder (11) heraus gebogen ist und mit Schrägschenkeln (24) an zugeordneten Schrägen (39) eines als Steuerschlitz (13) ausgebildeten Langloches (34) bei der Rastbewegung entlang gleitet und einen in Einsteckrichtung (21) gerichteten Versatz ausführt.

5. Steckverbindung nach Anspruch 3, **dadurch gekennzeichnet, dass** der Steuerbügel (14') etwa trapezförmig aus der Rastfeder (11) heraus gebogen ist und eine in Einsteckrichtüng (21) nach vorne gerichtete Abkröpfung (51) ausbildet, die mit der Schräge (3) an der Rastschulter (2) des Stutzens (1) zusammen wirkt.

6. Steckverbindung nach einem der Ansprüche 3 oder 4, **dadurch gekennzeichnet, dass** erst wenn der Steuerbügel (14) an der Rastfläche (5) der Rastschulter (2) eingerastet ist, die Rastfeder (11, 11') in eine abgesenkte Position gebracht wird, und dadurch die Rastschenkel (29, 29') der Rastfeder in den Bereich der Rastfläche (5) an der Rastschulter (2) gelangen und somit synchron und gleichzeitig einrasten.

7. Steckverbindung nach einem der Ansprüche 3 bis 5, **dadurch gekennzeichnet, dass** anstatt des aus der Rastfeder herausgebogenen Steuerbügels (14, 14') ein Gleitschuh, Ansatz oder Fahne an der Rastfeder befestigt ist.

8. Steckverbindung nach einem der Ansprüche 1 bis 7, **dadurch gekennzeichnet, dass** der durch den Rastfederdurchbruch (15,16) am Stecker hindurch greifende Abschnitt der Rastschenkel (29) der Rastfeder (11) gerade ausgebildet ist.

9. Steckverbindung nach einem der Ansprüche 1 bis 7, **dadurch gekennzeichnet; dass** der durch den Rastfederdurchbruch (15',16') am Stecker hindurch greifende Abschnitt der Rastschenkel (29) der Rastfeder (11) radial einwärts gerichtet abgekröpft ausgebildet ist.

## Claims

1. Plug-in connector for pipe and hose lines, comprising a connector fitting (1) with a catch shoulder (2) extending at least partially around the external circumference, formed by a bevel (3) protruding out from the external circumference and, adjoining it behind in the plug-in direction (21), a catch surface (5), as well as a socket connector (7) which can be clipped onto the connector fitting (1) by means of at least two mutually spaced apart catch points (15, 16, 29, 29') on the catch surface (5) of the connector fitting (1), which bears a radially displaceable, approximately U-shaped spring clip (11, 11'), which U-shaped spring clip (11, 11') forms the at least two mutually spaced apart catch points (15, 16, 29, 29') in co-operation with the catch surface (5), and the two side arms of the U-shaped spring clip (11, 11') are designed as catch arms (29, 29'), and the spring clip (11, 11') forms at least one other catch point (13, 14) disposed approximately centrally with respect to the at least two mutually spaced apart catch points (15, 16, 29, 29') between the socket connector (7) and the connector fitting (1), and this other catch point (13, 14) extends in front of both of the at least two mutually spaced apart catch points (15, 16, 29, 29') in the plug-in direction (21), **characterised in that** the spring clip (11, 11') has a central base arm and the catch arms (29, 29') extend substantially parallel with one another.

2. Plug-in connector as claimed in claim 1, **characterised in that** when the connector fitting (1) is inserted in the socket connector (7), the central catch connection on the spring clip (11, 11') snaps onto the catch surface (5) on the connector fitting(1) first of all, causing a relative movement of the spring clip (11, 11') on the socket connector (7) directed radially inwards, which moves the two side catch arms (29, 29') of the spring clip (11, 11') with an axial offset (50) so that they snap onto the catch surface (5) of the connector fitting (1).

3. Plug-in connector as claimed in claim 1 or 2, **characterised in that** the other, approximately central catch point is provided in the form of a control bow (14, 14') on the spring clip (11, 11') directed radially inwards.

4. Plug-in connector as claimed in claim 3, **characterised in that** the control bow (14) is bent out from the spring clip (11) in an approximately trapezoidal shape and slides by means of oblique arms (24) along co-operating oblique surfaces (39) of a slot (34) serving as a control slot (13) during the clip-on movement and effects an offset displacement directed in the plug-in direction (21).

5. Plug-in connector as claimed in claim 3, **characterised in that** the control bow (14') is bent out from the spring clip (11) in an approximately trapezoidal shape and forms an offset (51) directed forwards in the plug-in direction (21) which co-operates with the bevel (3) on the catch shoulder (2) of the connector fitting (1).

6. Plug-in connector as claimed in one of claims 3 or 4, **characterised in that** it is not until the control bow (14) has snapped onto the catch surface (5) of the catch shoulder (2) that the spring clip (11, 11') is moved into a lowered position, causing the catch arms (29, 29') of the spring clip to move into the region of the catch surface (5) on the catch shoulder (2) and thus snap on synchronously and simultaneously.

7. Plug-in connector as claimed in one of claims 3 to 5, **characterised in that** instead of the control bow (14, 14') bent out from the spring clip, a shoe, shoulder or tab is attached to the spring clip.

8. Plug-in connector as claimed in one of claims 1 to 7, **characterised in that** the portion of the catch arm (29) of the spring clip (11) extending through the spring clip orifice (15, 16) on the plug-in connector is of a straight design.

9. Plug-in connector as claimed in one of claims 1 to 7, **characterised in that** the portion of the catch arm (29) of the spring clip (11) extending through the spring clip orifice (15', 16') on the plug-in connector is designed with an offset directed radially inwards.

## Revendications

1. Raccord à emboîtement pour des conduites tubulaires ou en tuyaux souples, constitué d'un embout (1) avec un épaulement d'arrêt (2) s'étendant au moins partiellement au pourtour extérieur, qui est formé par un biais (3) remontant depuis le pourtour extérieur et d'une face d'arrêt (5) faisant suite dans la direction d'enclenchement (21), et avec un connecteur (7) apte à être enclenché avec l'embout (1) par au moins deux emplacements d'arrêt espacés l'un de l'autre (15, 16, 29, 29') à la face d'arrêt (5) de l'embout (1), qui supporte un ressort d'arrêt (11, 11') déplaçable radialement, à peu près en forme de U, ledit ressort d'arrêt (11, 11') en forme de U formant conjointement avec la face d'arrêt (5) les au moins deux emplacements d'arrêt (15, 16, 29, 29') espacés l'un de l'autre, où les deux branches latérales du ressort d'arrêt en forme de U (11, 11') sont réalisées comme branches d'arrêt (29, 29'), où le ressort d'arrêt (11, 11') réalise au moins un autre emplacement d'arrêt (13,14), à peu près au milieu relativement à au moins deux emplacements d'arrêt espacés l'un de l'autre (15, 16, 29, 29') entre le connecteur (7) et l'embout (1), et où cet autre emplacement d'arrêt (13, 14) est en amont dans la direction d'enfichage (21) des au moins deux emplacements d'arrêt espacés l'un de l'autre (15, 16, 29, 29'), **caractérisé en ce que** le ressort d'arrêt (11, 11') présente une branche de base médiane, et les branches d'arrêt (29, 29') sont réalisées sensiblement parallèlement l'une à l'autre.

2. Raccord à emboîtement selon la revendication 1, **caractérisé en ce que** lors de l'emboîtement du raccord (1) dans le connecteur (7), tout d'abord la liaison d'arrêt médiane au ressort d'arrêt (11, 11') s'enclenche avec la face d'arrêt (5) au raccord (1) et de ce fait, un mouvement relatif dirigé radialement vers l'intérieur du ressort d'arrêt (11, 11') a lieu au connecteur (7), qui amène avec un déport axial (50) les deux branches d'arrêt latérales (29, 29') du ressort d'arrêt (11, 11') à s'enclencher à la face d'arrêt (5) du raccord (1).

3. Raccord à emboîtement selon la revendication 1 ou 2, **caractérisé en ce que** l'autre emplacement d'arrêt à peu près médian est réalisé comme étrier de commande (14, 14') dirigé radialement vers l'intérieur, au ressort d'arrêt (11, 11').

4. Raccord à emboîtement selon la revendication 3, **caractérisé en ce que** l'étrier de commande (14) est courbé à peu près en forme de trapèze depuis le ressort d'arrêt (11) et glisse avec les branches inclinées (24) à des biais associés (39) d'un trou oblong (34) réalisé comme fente de commande (13) lors du mouvement d'enclenchement et exécute un déport dirigé dans la direction d'emboîtement (21).

5. Raccord à emboîtement selon la revendication 3, **caractérisé en ce que** l'étrier de commande (14') est courbé à peu près en forme de trapèze à partir du ressort d'arrêt (11) et réalise un coudage (51) dirigé vers l'avant dans la direction d'emboîtement (21) qui coopère avec le biais (3) à l'épaulement d'arrêt (2) du raccord (1).

6. Raccord à emboîtement selon l'une des revendications 3 ou 4, **caractérisé en ce que** seulement lorsque l'étrier de commande (14) est enclenché à la face d'arrêt (5) de l'épaulement d'arrêt (2), le ressort d'arrêt (11, 11') est amené dans une position abaissée, et de ce fait, les branches d'arrêt (29, 29') du ressort d'arrêt arrivent dans la zone de la face d'arrêt (5) à l'épaulement d'arrêt (2) et s'enclenchent ainsi d'une manière synchrone et simultanée.

7. Raccord à emboîtement selon l'une des revendications 3 à 5, **caractérisé en ce qu'**à la place de l'étrier de commande (14, 14') courbé à partir du ressort d'arrêt, un patin coulissant, bout rapporté ou indicateur est fixé au ressort d'arrêt.

8. Raccord à emboîtement selon l'une des revendications 1 à 7, **caractérisé en ce que** la section des branches d'arrêt (29) du ressort d'arrêt (11) passant à travers le perçage de ressort d'arrêt (15, 16) au raccord est réalisée d'une manière rectiligne.

9. Raccord à emboîtement selon l'une des revendications 1 à 7, **caractérisé en ce que** la section des branches d'arrêt (29) du ressort d'arrêt (11) passant à travers le perçage de ressort d'arrêt (15', 16') au raccord est réalisée d'une manière coudée, dirigée radialement vers l'intérieur.
